# EUROPEAN PATENT APPLICATION

(11) **EP 1 369 815 A1**
(43) Date of publication of application: **10.12.2003**
(21) Application number: 02368055.6
(22) Date of filing: 03.06.2002
(51) Int. Cl.: G06K 19/077

(54) **Battery pack with electronics assembly**

(71) Applicant: Dialog Semiconductor GmbH, 73230 Kirchheim/Teck-Nabern (DE)
(72) Inventor: Edwards, Malcolm, 85635 Hoehenkurchen (DE)
(74) Representative: Schuffenecker, Thierry

(57) **Abstract**

A removable battery package incorporating electronic functions and a method to assemble said battery package is achieved. The battery package comprises one or more rigid or flexible battery cells (46) of various shape and a smart card (21) being wrapped around said battery cells (46) to form an inside housing of the battery package casing. Said smart card (21) could have customized dimensions to suit the battery cell and battery pack dimensions and could have the external connections (24) on one side or on both sides. A cold welding process is possible to provide the connections from the battery tabs to said smart card.

## Description

### Technical field

This invention relates generally to a battery assembly, and more particularly to an assembly technique to incorporate electronic functions within removable battery packs.

### Background

The popularity of portable electronic devices has led to a huge increase in the usage of battery packs. Many of these applications require removable battery packs. Sometimes the battery chemistry used requires electronics to make it safe. Also sophisticated electronic monitoring and control functions communicating between the battery and said electronic device are incorporated within the battery pack. Usually the bare battery cells have to be mounted together with any required electronics into a sealed housing with exposed electrical contacts to connect the pack to the electronic device using it.

Any electronics incorporated in the battery pack add to the total pack cost. Today this represents a significant part of the total pack costs. Furthermore it also adds to the total volumetric size of the completed pack.

Smart cards are the worlds largest single market for electronic devices. Specialized, highly automated, assembly machines have been developed to make them very cost effective. The basic card is a 0.4 - 0.6 mm thick semi-rigid plastic material with exposed gold plated contacts and electronic components embedded within the card.

Semiconductor die are pre-assembled onto reeled lead-frames, singulated, and then mounted into the plastic card. It is today also possible to mount additional electronic components within the same assembly.

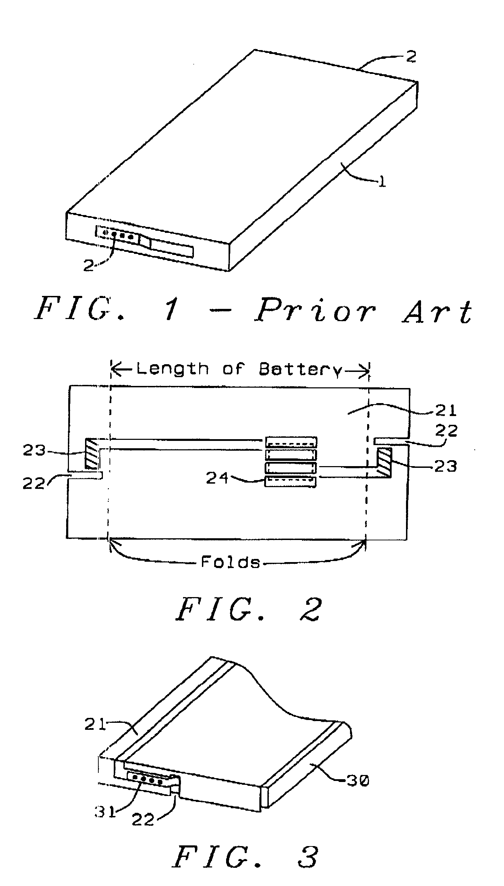

Bare battery cells are manufactured in various shapes. The most popular shapes are cylindrical and rectangular (prismatic). It is very common that the terminals are flat metal tabs at opposite ends of the cell. The tabs are usually cold-welded to the cell and are used to connect the cell to the electronics and the external pack connections. It is generally not allowed to use any heat process when connecting the cell connection tabs to the electronics as the heat could damage the cell. Usually a cold welding process is used. **Fig. 1** prior art shows a typical prismatic battery cell **1** with metal connection tabs **2** welded to the casing (the hidden end also has a similar tab attached which is concealed in the drawing).

U. S. Patent (5,498,903 to Dixon et al.) describes an integrated circuit package of the surface-mountable type within which a battery is mounted. Battery leads extend from the side of the package body opposite that which is adjacent the circuit board when mounted, and between which a conventional battery may be placed. A gap is present between the housing and the battery. The gaps thermally insulate the battery from the package body and housing, so that the circuit may be subjected to solder reflow mounting to a circuit board, while insulating the high temperature from the battery.

U. S. Patent (6,109,530 to Larson et al.) discloses a chip-battery micro-module and fabrication there of wherein an integrated circuit "chip" is secured to a battery coin cell using various conductive and insulating layers that provide power to the chip. The chip-battery micro-module may be used to power an electronic accessory that is directly attached thereto, such as an LCD display or speaker, or to power a circuit in a smart card or electronic device such as a portable phone. The chip battery micro-module can be integrated into a plastic smart card.

U. S. Patent (6,284,406 B1 to Xing et al) shows an lC card comprising an electronic device and a battery within a plastic card for electrically energizing the electronic device. The battery is comprised as a monolithic electro-chemical cell having a lithium-containing cathode, a carbon anode, and a porous polymer separator infused with electrolyte solution. The cell has a thickness of less than 0.7 mm. The battery has an overall thickness of less than 0.8 mm.

### Summary of the invention

A principal object of the present invention is to provide a battery package to incorporate electronic functions.

A further object of the present invention is to use proven low-cost assembly techniques to build a battery package incorporating electronic functions.

In accordance with the objects of this invention a battery package comprising a battery cell and an lC card comprising electronic circuitry, an area for battery tab contacts and external connections has been achieved. Said lC card is wrapped around said battery cell forming the inside housing of the battery package casing and wherein said lC card is connected to the tabs of said battery cell.

In accordance with the objects of this invention a battery package comprising a rigid battery cell and an lC card comprising electronic circuitry, an area for battery tab contacts and external connections has been achieved. Said lC card is wrapped around said rigid battery cell forming the inside housing of the battery package casing and wherein said IC card is connected to the tabs of said battery cell.

In accordance with the objects of this invention a battery package comprising a flexible battery cell and an IC card of any size required comprising electronic circuitry, an area for battery tab contacts and external connections has been achieved. Said lC card is connected to the tabs of said battery cell via flexible contacts.

In accordance with further objects of this invention a battery package comprising a rigid battery cell and a double-sided lC card comprising electronic circuitry having external contacts on both sides has been achieved. The external contacts providing connections to the battery cell are located on the face of said card nearest to the battery cell.

In accordance with further objects of the invention a method to assemble a battery package incorporating electronic functions providing a battery cell and a single sided lC card comprising electronic circuitry, an area for battery tab contacts and external connections has been achieved. Said method comprises as first step to mount circuitry and contacts on said lC card, followed by providing folds and slots for easier handling of said lC card. Additional steps are to wrap said lC card around said battery cell and to establish electrical connections between said lC card and said battery cell.

### Description of the drawings

In the accompanying drawings forming a material part of this description, there is shown:
Fig. 1 prior art illustrates a typical prismatic battery cell with connection cells
Fig. 2 shows an electronic assembly on a battery card
Fig. 3 shows a battery cell connection to a battery card
Fig. 4 A shows a battery card on the visible card face.
Fig. 4 B Shows a battery card on the card face close to the battery cell.
Fig. 4 C shows a battery connection to a double-sided card.
Fig. 5 illustrates how a flexible battery cell is connected to a battery card.
Fig. 6 shows a flowchart of the method illustrating an assembly process of a battery pack using a single-sided lC card
Fig. 7 shows a flowchart of the method illustrating an assembly process of a battery pack using a double-sided lC card.

### Description of the preferred embodiments

The preferred embodiments disclose a smart card or a "battery card" to be assembled combined with one or more battery cells to a battery package and a method how to assemble said battery package.

In order to distinguish this new smart card usage it will be referred to as a battery card in this document.

Various shapes and forms of construction are possible for the battery card. A typical smart card has always industry standard dimensions while the shape and the form of a battery card have to match with the shape and the form of the battery cells used in the battery pack. The battery card has customized dimensions to suit the dimensions of the cell and or of the battery pack. One example is shown in **Fig. 2** where the battery card is dimensioned to lie flat over the battery and to fold the narrow ends over the tab ends of the battery. **21** represents the battery card. The areas for the battery tab connection at both ends of the card and the connection contacts **24** to the circuitry on the battery card are signified by **23**. The dotted lines show where the card is folded over one or more battery cells. The distance between the both folds corresponds to the length of the battery. The battery card can be used to monitor the temperature of the battery cell as well. Since the battery card contacts the battery cell the circuitry on the battery card can measure the temperature of the cell and transmit this information via the external contacts **24** to a charger.

The slots **22** in the card would allow the battery connection tabs to protrude through the card so that the tabs could be welded to the card. **Fig. 3** shows an example of a rigid prismatic battery cell used as e.g. a Li-lon cell. **Fig. 3** shows how the battery card **21** is folded over said rigid battery and how the battery cell is connected to the battery card. The connection tab **31** welded to the battery card is shown beside said slot **22** of the battery card. Said connection card serves to electrically connect the cell to the battery card. Any product labeling could be printed on the visible card side.

A further example of a battery card construction is a card with external connections on both sides. Thus the external connections providing power and/or communications to the portable external device would be on the card face furthest from the battery cell and on the face next to the battery the cell connections would be placed. Such a card construction could also form the inside housing of the battery pack casing. This would additionally reduce battery pack costs. Any product labeling could also be printed on the visible card side the same way as with single sided battery cards.

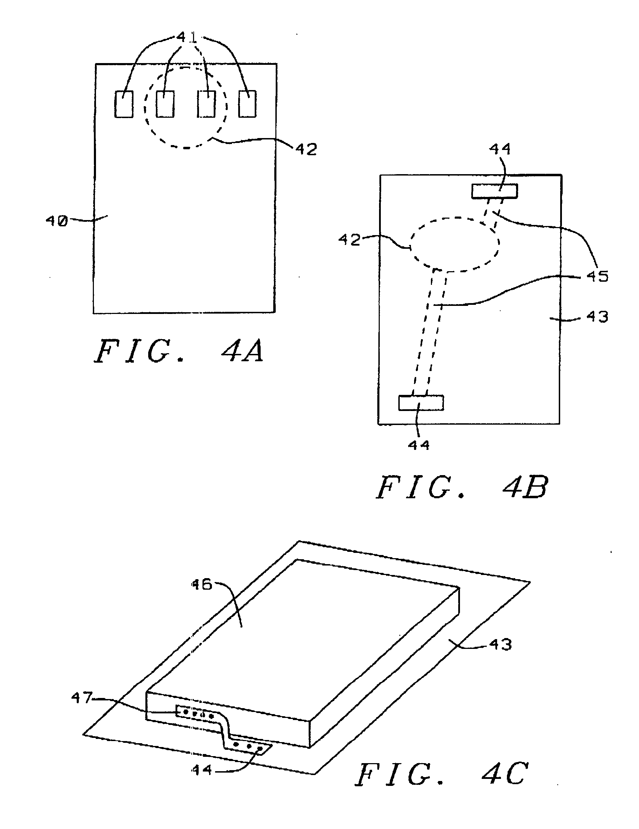

**Fig. 4 A, B and C** illustrate the usage of such a double-sided battery card together with a rigid battery as shown in **Fig. 3.** Fig. **4A** shows the side of such a double-sided battery card, that is furthest from the battery cell **40.** It is called side A in this document. The external contacts of the side A **40** of said double sided battery card to a portable electronic device as a mobile phone, palm top computer, etc. are signified by the number **41**. The dotted line **42** signifies the electronic circuitry buried in the battery card.

Fig. **4B** shows the side of said double-sided battery card that is next to said rigid battery cell, signified by **43**. It is called side B in this document. The area circled by the dotted line **42** signifies the buried electronic circuitry. The battery connections **44** are shown at the top and at the bottom of the side B. The dotted lines **45** signify the buried connections between the electronic circuitry **42** and the battery connections **44**.

Fig. **4C** shows said a rigid battery cell **46** and the connection between the side B **43** of said double-sided battery card and the battery cell in an unfolded state of said battery card. The battery card can be folded around the battery cell afterwards. The folding depends on the required shape of the final battery pack. The electrical connection between the battery cell and the battery card is performed by the connection tabs on the battery cell **47** and the connection tabs on the battery card **44.** Same numbers are used for the same details of **Fig. 4 A, B** and **C.**

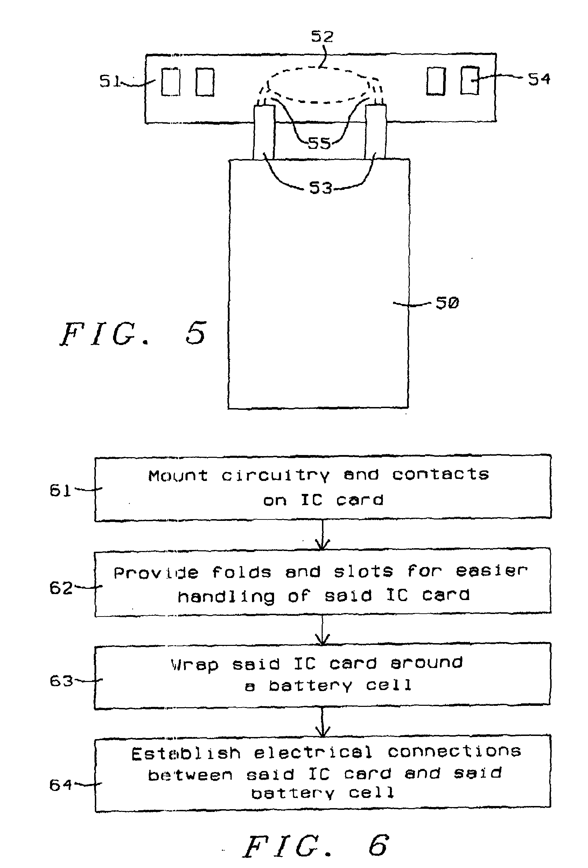

**Fig. 5** illustrates the assembly of a flexible battery cell **50** as e.g. a Lithium Polymer cell with a battery card **51.** The battery card could be single or double sided. The final positioning of the battery card in relation to the battery cell depends on where the external contacts are required to be.

The connections between the battery having flexible metal contacts **53** and the battery card **51** are cold-welded. The dotted line **52** illustrates the area of the buried electronic circuits. The external contacts to any portable device are signified by **54**.The invisible electrical connections between the cold welded battery contacts **53** and said buried electronic circuitry **52** are made by the invisible conducting lines **55**. The final positioning of the battery card in relation to the cell depends on where the external contacts are required to be located. They could be located e.g. on the end (flexible metal contacts **53** bent 90 degrees) or on the back of the assembled battery pack.

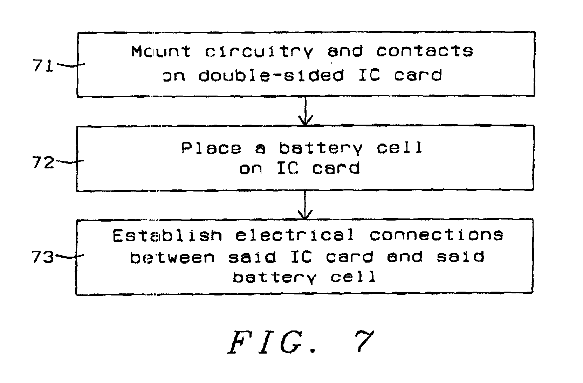

Fig. **6** illustrates a method how to assemble a battery pack comprising a single-sided battery card used as housing and one battery cell. The same steps can be used if more than one battery cells are being used. Step **61** describes that circuitry and contacts are mounted into said battery card. Step **62** describes that folds and slots are provided on the battery card for easier handling of said card. Step **63** describes that said battery card is wrapped around said battery cell. The last step **64** describes that that the electrical contacts are being established. A cold welding process is one alternative to establish said contacts.

Fig. **7** illustrates a method how to assemble a battery pack comprising a double-sided battery card. The folding and wrapping around process steps, as described in the steps **62** and **63**, are not required using double-sided battery cards. Step **71** describes that circuitry and contacts are mounted on the double-sided card. In step **72** the battery cell is placed on the appropriate side of the battery card. It is possible to use more than one battery cells. The last step **73** describes that that the electrical contacts are being established. A cold welding process could be used as with single-sided cards.

While the invention has been particularly shown and described with reference to the preferred embodiments thereof, it will be understood by those skilled in the art that various changes in form and details may be made without departing from the spirit and scope of the invention.

## Claims

1. A battery package comprising:
- a battery cell; and
- an lC card comprising electronic circuitry, an area for battery tab contacts and external connections wherein said lC card is wrapped around said battery cell forming the inside housing of the battery package casing and wherein said lC card is connected to the tabs of said battery cell.

2. A battery package comprising
- a rigid battery cell; and
- an lC card comprising electronic circuitry, an area for battery tab contacts and external connections wherein said lC card is wrapped around said rigid battery cell forming the inside housing of the battery package casing and wherein said lC card is connected to the tabs of said battery cell.

3. A battery package comprising:
- a flexible battery cell; and
- an lC card of any size required comprising electronic circuitry, an area for battery tab contacts and external connections wherein said lC card is connected to the tabs of said battery cell via flexible contacts.

4. The battery package of claim 3 wherein said flexible contacts are bent 90 degrees to enable the positioning of the external contacts on the end of the battery pack.

5. The battery package of claim 3 wherein the external contacts are on the back of the assembled battery pack.

6. The battery package of claim 3 wherein said lC card has the contacts towards the battery on one side and the external contacts on the other side.

7. A battery package comprising
- a rigid battery cell; and
- a double-sided lC card comprising electronic circuitry having external contacts on both sides, wherein the external contacts providing connections to the battery cell are located on the face of said card nearest to the battery cell.

8. The battery package of claim 1 or 2 or 3 or 7 wherein the connections between the battery tabs and said battery tab contacts of said lC card are done by cold welding.

9. The battery package of claim 1 or 2 or 3 or 7 wherein product-labelling information is printed on the visible part of said lC card.

10. The battery package of claim 1 or 2 or 7 wherein the circuitry on said lC card is sensing the temperature of the battery cell and transmits this information via external contacts to a charger.

11. The battery package of claim 1 or 2 or 3 or 7 wherein more than one battery cells is being used.

12. The battery package of claim 1 or 2 or 7 wherein slots in said IC card are provided to house the battery tabs after folding said lC card around said battery cell.

13. The battery package of claim 1 or 2 or 7 wherein folds in said lC card are provided to support the folding around the battery cell.

14. A method to assemble a battery package incorporating electronic functions comprising:
- providing a battery cell and a single sided lC card comprising electronic circuitry, an area for battery tab contacts and external connections;
- mounting circuitry and contacts on lC card;
- providing folds and slots for easier handling of said lC card;
- wraping said lC card around said battery cell; and
establish electrical connections between said lC card and said battery cell.

15. The method of claim 14 wherein more than one battery cells is being used.

16. A method to assemble a battery package incorporating electronic functions comprising:
- providing a battery cell and a double-sided IC card comprising electronic circuitry, an area for battery tab contacts on one side and an area for external connections on the other side;
- mounting circuitry and contacts on lC card;
- placing said battery cell on lC card; and
- establishing electrical connections between said lC card and said battery cell.

17. The method of claim 14 or 16 wherein a cold welding process is used to establish said electrical connections.

18. The method of claim 16 wherein more than one battery cells is being used.
